# EUROPÄISCHE PATENTSCHRIFT

(11) **EP 0 363 586 B1**
(45) Veröffentlichungstag und Bekanntmachung des Hinweises auf die Patenterteilung: **19.01.1994**
(21) Anmeldenummer: 89114084.0
(22) Anmeldetag: 31.07.1989
(51) Int. Cl.: F24D 19/08, F24D 19/00

(54) **Vorrichtung zum Abscheiden von Gas**
Gas separator
Appareil pour séparer du gaz

(30) Priorität: 20.09.1988 DE 3831912
(43) Veröffentlichungstag der Anmeldung: 18.04.1990
(73) Patentinhaber: WILO GmbH, D-44263 Dortmund (DE)
(72) Erfinder: Naasner, Günter, D-4152 Kempen 1 (DE)
(74) Vertreter: Cohausz & Florack Patentanwälte

(56) Entgegenhaltungen:
- DE-A- 3 422 788
- FR-A- 1 591 992
- NL-A- 6 515 366

## Beschreibung

Die Erfindung betrifft eine Heizungsanlage, die eine Vorrichtung zum Abscheiden von Gas umfaßt, durch eine in der Heizungswasserleitung liegende Kammer die am oberen Ende ein Gasentlüfungsventil aufweist wobei der Ein- und Auslaß der Kammer über Anschlüsse mit der Heizungsleitung lösbar verbunden ist.

Heizungsanlagen sind oft mit Luft- oder Gasanteilen belastet. Die Luft kann eintreten durch Undichtigkeiten des Heizsystems oder die partiell auftretende Unterdrücke in Abkühlphasen. Außerdem werden bei Füllvorgängen Luftanteile in die Anlage eingebracht. Hinzu kommen Sauerstoffdiffusionen durch Kunststoff-Bauteile wie zum Beispiel Kunststoffrohre von Fußboden-Heizungen. Diese Luft- und Gasanteile führen zu Geräuschproblemen und zu Korrosionen. Die Korrosionsprodukte rühren her von Korrosionsvorgängen, in Gußkesseln, in Stahlleitungen und auch in Guß- oder Stahlheizkörpern. Durch die Korrosionsprodukte kann es zum Verschlammen und Verstopfen der Kessel kommen oder häufig auch zum Verschlammen und Verstopfen der Fußbodenheizschläuche.

Um Anlagen zu entlüften ist es bekannt, Entlüftungseinrichtungen zu installieren, die an einer hohen Stelle der Anlage die Luft sammeln und dann über Handventile oder automatische Ventile abführen. Außerdem sind Entlüftungspumpen im Einsatz, die an der Saugseite der Umwälzpumpe mit einer Entlüftungseinrichtung versehen sind. Um der Korrosion vorzubeugen werden auch Korrosionsschutzmittel eingesetzt, die aber häufig nur mangelhaft wirken, problematisch einzubringen sind und auch zu Funktionsstörungen anderer Bauteile beitragen. Es bleibt also nur übrig, die Anlage zu Filtern oder bei verschlammten Anlagen ein Spülen der Leitungsteile bzw. des Kessels mit hohem Druck. Oft führen diese Spülvorgänge jedoch nicht zum Erfolg.

Eine Vorrichtung der eingangsgenannten Art ist aus der FR-A-1 591 992 bekannt. Diese bekannte Vorrichtung weist keinen Absetzraum für Feststoffe auf. Ferner ist es aus der DE-A-34 22 788 bekannt, eine Heizungsanlage mit einem Kessel zu versehen, der Luft abscheidet und einen Sumpf aufweist, in dem sich Feststoffe absetzen. Ein Entleeren des Sumpfes ist nur durch Rückspülen möglich. Auch ist nicht beobachtbar, wie weit der Sumpf gefüllt ist.

Aufgabe der Erfindung ist es eine Vorrichtung der eingangs genannten Art zu schaffen, die bei einfacher Konstruktion und Montage das Heizungswasser nicht nur von Luft, sondern auch von Feststoffen befreit, wobei der abgesetzte Feststoff beobachtbar und leitcht entnehmbar ist.

Diese Aufgabe wird erfindungsgemäß dadurch gelöst, daß
- daß die Kammer im unteren Bereich einen entleerbaren Feststoff-Sammelraum aufweist,
- daß der Feststoffsammelraum von der übrigen Kammer lösbar, insbesondere angeschraubt ist,
- daß der Feststoffsammelraum aus durchsichtigem Material besteht, und
- daß die Kammer und insbesondere der Feststoffsammelraum zylindrisch sind.

Es ist damit nur noch eine einzige Einrichtung für die zwei Aufgaben Entlüftung und Feststoffabscheidung zu installieren. Die Absetzkammer ist leicht zu entleeren und zu reinigen, und die Rohrleitungsanschlüsse können inline ausgeführt sein, damit eine einfache Installation möglich ist. Besonders vorteilhaft ist es auch, daß die Einrichtung über einen geringen Strömungswiderstand verfügt. Es kann gut beobachtet werden, wieviel Feststoff sich abgesetzt hat.

Besonders vorteilhaft ist es, wenn die Kammer im waagerechten Querschnitt kreisförmig ist und der Einlaß und/oder Auslaß tangential an der Kammeraußenwand befestigt ist bzw. sind. In dem neuen Feststoff-/Gas-Abscheider wird das Heizungswasser hinter dem Kessel in einen Zyklon gegeben. Die dort entstehenden Fliehkräfte werden Teile hoher Dichte, z.B. Feststoff und Korrosionsprodukte, nach außen treiben und dort die Möglichkeit geben an der Gehäusewand abzusinken, während die Anteile von Luft und Gas, die über eine geringe Dichte verfügen, sich im Zentrum sammeln, zu größeren Blasen verbinden können und aufsteigen bis zur Entlüftungseinrichtung. Es ist damit nur eine einzige Einrichtung für die zwei Funktionen Entlüftung und Feststoffabscheidung zu installieren.

Hierbei ist es besonders vorteilhaft, wenn für eine bessere Feststoffabscheidung der Einlaß niedriger als der Auslaß liegt. Alternativ kann aber auch für eine bessere Gasabscheidung der Auslaß niedriger als der Einlaß liegen.

Um bei der Entleerung der Feststoffabsetzkammer Ventil vor und hinter der Vorrichtung nicht schließen zu müssen, wird vorgeschlagen, daß zwischen dem Feststoffsammelraum und der übrigen Kammer ein Absperrventil, insbesondere ein Schieber befestigt ist. Besonders vorteilhaft ist es, wenn die Vorrichtung in Strömungsrichtung hinter dem Heizungskessel montiert ist.
Die Position hinter dem Kessel ist vorteilhafterweise zu wählen, weil im Kessel die Ausgasungsprozesse stattfinden und damit auch die Gasblasen sehr groß sind und zweitens weil die hauptsächlich im Kessel entstehenden Korrosionsprodukte direkt hinter dem Kessel abgefangen werden können.

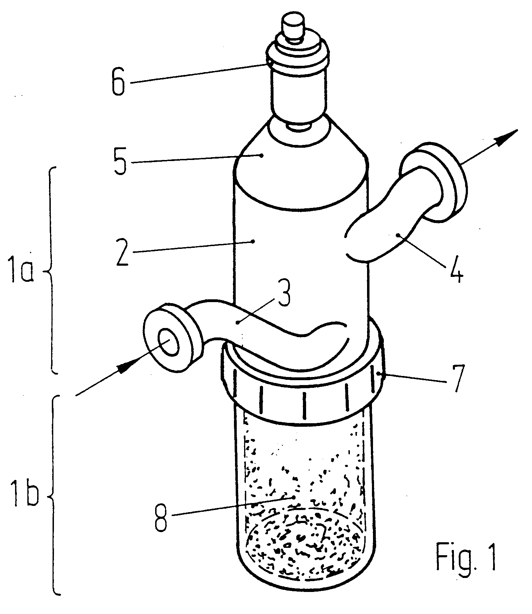

Ein Ausführungsbeispiel der Erfindung ist in der Zeichnung dargestellt und wird im folgenden näher beschrieben. Es zeigen
- Figur 1: eine perspektivische Darstellung der Vorrichtung und
- Figur 2: einen waagerechten Schnitt durch die Vorrichtung in Höhe von Ein- und Auslaß, wobei Ein- und Außlaß in der selben Höhe gezeichnet sind.

Die Vorrichtung weist eine Kammer 1 mit zylindrischer Außenwand 2 auf, wobei die Achse des Zylinders senkrecht steht. Die Kammer 1 ist aufgeteilt in einen oberen Bereich 1a mit metallener Wand, in die der Einlaßstutzen 3 tangential mündet und von der der Auslaßstutzen 4 tangential abgeht. An der Wand 2 des Bereichs 1a schließt oben eine kegelabschnittförmige Deckenwand 5 an, auf der axial ein automatisches Entlüftungsventil 6 befestigt ist.

An den Kammerbereich 1a schließt an der Unterseite ein unterer Kammerbereich 1b, der dem Absetzen von Feststoffen dient. Der Bereich 1b wird von einem topfförmigen und damit zylindrischen Gefäß aus durchsichtigem Material, insbesondere aus Glas oder Kunststoff gebildet, der durch einen Schraubring 7 an den oberen Behälterteil 1a befestigt

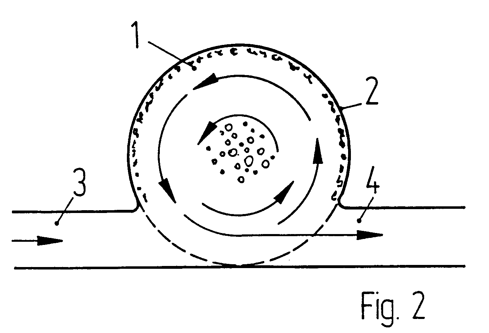

Im Ausführungsbeispiel ist der Auslaß 4 höher gelegen als der Einlaß 3, so daß die Feststoffe besonders sicher abgeschieden werden, die entsprechend Figur 2 ausreichend Zeit haben im Zyklonenbereich aufgrund der Fliehkräfte nach außen zu treiben und an der Gehäusewand nach unten in den Abscheidetopf 8 abzusinken. Dagegen sammeln sich die Gasblasen im Zentrum und steigen nach oben zum Entlüftungsventil 6. Wird dagegen der Einlaß 3 höher als der Auslaß 4 befestigt, so wird die Gasabscheidung verbessert. Die Vorrichtung kann unterschiedliche Formen und Größen haben. Insbesondere kann sie auch kugel- oder quaderförmig sein. Ferner kann im unteren Bereich 1a unterhalb des Einlasses oder Auslasses und oberhalb des Topfes 8 ein Absperrventil angeordnet sein, dessen insbesondere schieberförmiges Ventilstellglied den gesamten waagerechten Kammerquerschnitt einnehmen kann und im abgeschlossenen Zustand dafür sorgt, daß der Abscheidetopf 8 (Sammelflasche) zum Entleeren lösbar, insbesondere abschraubbar ist, ohne Ventile vor und hinter der Vorrichtung in der Heizungsleitung schließen zu müssen. Auch kann zwischen den beiden Bereichen 1a und 1b in der Kammer ein waagerechter Boden befestigt sein, der am Rand, insbesondere teilringförmige Schlitze bzw. Öffnungen aufweist, um die Feststoffe nach unten durchzulassen. Diese Öffnungen können besonders leicht durch das Ventilstellglied, insbesondere durch einen Drehschieber verschlossen werden.

Die Vorrichtung kann an verschiedenen Stellen einer Heizungsanlage in der Leitung des Heizungswassers befestigt werden. Besonders vorteilhaft wird sie in Strömungsrichtung hinter dem Heizkessel befestigt.

## Patentansprüche

1. Heizungsanlage, die eine Vorrichtung zum Abscheiden von Gas umfaßt, durch ein in der Heizungswasserleitung liegende Kammer (1), die am oberen Ende ein Gasentlüftungsventil (6) aufweist, wobei der Ein- und Auslaß (3, 4) der Kammer über Anschlüsse mit der Heizungsleitung lösbar verbunden ist **dadurch gekennzeichnet,**
- daß die Kammer (1) im unteren Bereich einen entleerbaren Feststoff-Sammelraum (1b) aufweist,
- daß der Feststoffsammelraum (1b) von der übrigen Kammer (1) lösbar, insbesondere angeschraubt ist,
- daß der Feststoffsammelraum (1b) aus durchsichtigem Material besteht, und
- daß die Kammer (1) und insbesondere der Feststoffsammelraum (1b) zylindrisch sind.

2. Vorrichtung nach Anspruch 1, **dadurch gekennzeichnet,** daß die Kammer (1) im waagerechten Querschnitt kreisförmig ist und der Einlaß und/oder Auslaß (3, 4) tangential an der Kammeraußenwand (2) befestigt ist bzw. sind.

3. Vorrichtung nach Anspruch 2, **dadurch gekennzeichnet,** daß für eine bessere Feststoffabscheidung der Einlaß (3) niedriger als der Auslaß (4) liegt.

4. Vorrichtung nach Anspruch 2, **dadurch gekennzeichnet,** daß für eine bessere Gasabscheidung der Auslaß (4) niedriger als der Einlaß (3) liegt.

5. Vorrichtung nach einem der vorherigen Ansprüche, **dadurch gekennzeichnet,** daß zwischen dem Feststoffsammelraum (1b) und der übrigen Kammer (1) ein Absperrventil, insbesondere ein Schieber befestigt ist.

6. Vorrichtung nach einem der vorherigen Ansprüche, **dadurch gekennzeichnet,** daß die Vorrichtung in Strömungsrichtung hinter dem Heizungskessel montiert ist.

## Claims

1. A heating installation having a device for the separation of gas through a chamber (1) which is disposed in the heating water pipe and has a gas venting valve (6) at the upper end, the inlet (3) and outlet (4) of the chamber being releasably connected via connections to the heating pipe, characterized in that
- the chamber (1) has in the lower zone an emptyable solids collecting space (1b),
- the solids collecting space (1b) is detachably connected, more particularly screwed to the upper chamber (1),
- the solids collecting space (1b) consists of a transparent material, and
- the chamber (1) and more particularly the solids collecting space (1b) are cylindrical.

2. A device according to claim 1, characterized in that the chamber (1) is circular in horizontal cross-section and the inlet (3) and/or outlet (4) is or are attached tangentially to the outside wall (2) of the chamber.

3. A device according to claim 2, characterized in that for improved solids separation the inlet (3) is located lower than the outlet (4).

4. A device according to claim 2, characterized in that for improved gas separation the outlet (4) is located lower than the inlet (3).

5. A device according to one of the preceding claims, characterized in that a shutoff valve, more particularly a slide valve, is attached between the solids collecting space (1b) and the rest of the chamber (1).

6. A device according to one of the preceding claims, characterized in that the device is mounted downstream of the heating boiler in the direction of flow.

## Revendications

1. Installation de chauffage qui comprend un dispositif pour l'extraction de gaz à travers une chambre (1) se trouvant dans la conduite d'eau de chauffage, qui présente à l'extrémité supérieure une valve de purge de gaz (6), l'entrée et la sortie (3, 4) de la chambre étant raccordées de manière démontable à la conduite de chauffage,
caractérisée en ce
- que la chambre (1) présente dans la région inférieure un volume collecteur de solides (1b) pouvant être vidé,
- que le volume collecteur de solides (1b) est séparable du reste de la chambre (1), en particulier est vissée,
- que le volume collecteur de solides (1b) est constitué d'un matériau transparent, et
- que la chambre (1) et en particulier le volume collecteur de solides (1b) sont cylindriques.

2. Dispositif selon la revendication 1,
caractérisé en ce que la chambre (1) est circulaire en section transversale horizontale et l'entrée et/ou la sortie (3, 4) est ou respectivement sont fixée(s) tangentiellement à la paroi extérieure (2) de la chambre.

3. Dispositif selon la revendication 2,
caractérisé en ce que, pour une meilleure séparation des solides, l'entrée (3) se trouve plus bas que la sortie (4).

4. Dispositif selon la revendication 2,
caractérisé en ce que, pour une meilleure extraction des gaz, la sortie (4) se trouve plus bas que l'entrée (3).

5. Dispositif selon l'une des revendications précédentes,
caractérisé en ce qu'un robinet d'arrêt, en particulier un robinet-vanne, est fixé entre le volume collecteur de solides (1b) et le reste de la chambre.

6. Dispositif selon l'une des revendications précédentes,
caractérisé en ce que le dispositif est monté derrière la chaudière de chauffage dans la direction d'écoulement.
